(19) **Europäisches Patentamt**
**European Patent Office**
**Office européen des brevets**

(11) **EP 3 985 592 A1**

(12) **EUROPEAN PATENT APPLICATION**

(43) Date of publication:
**20.04.2022 Bulletin 2022/16**

(21) Application number: **21210232.1**

(22) Date of filing: **30.06.2015**

(51) International Patent Classification (IPC):
**G06Q 30/04** (2012.01)    **G06Q 40/00** (2012.01)
**G06Q 10/06** (2012.01)    **G06F 17/40** (2006.01)
**G06F 21/62** (2013.01)    **G09C 1/00** (2006.01)
**G06Q 50/18** (2012.01)    **G06Q 20/14** (2012.01)
**G06Q 10/10** (2012.01)

(52) Cooperative Patent Classification (CPC):
**G06Q 10/1091; G06Q 20/145; G06Q 30/04;**
**G06Q 40/125; G06Q 50/18; G09C 1/00**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.06.2014 US 201461998577 P**
**29.06.2015 US 201514756684**

(62) Document number(s) of the earlier application(s) in
accordance with Art. 76 EPC:
**15815756.0 / 3 161 748**

(71) Applicants:
• **Shaaban, Ahmed, Farouk**
**Chicago, IL 60601 (US)**
• **Thandra, Venkat**
**Chicago IL 60601 (US)**

(72) Inventors:
• **Shaaban, Ahmed, Farouk**
**Chicago, IL 60601 (US)**
• **Thandra, Venkat**
**Chicago IL 60601 (US)**

(74) Representative: **Cabinet Beaumont**
**4, Place Robert Schuman**
**B.P. 1529**
**38025 Grenoble Cedex 1 (FR)**

Remarks:
This application was filed on 24.11.2021 as a
divisional application to the application mentioned
under INID code 62.

(54) **FLAT FEE AND INTERIM BILLS FOR PROFESSIONAL FIRMS AND BUSINESS ASSOCIATIONS**

(57)    The present invention consists of an improved System and Method for generating Flat Fee Bills and Interim Bills to professional services client where the System will automatically assign a Flat Fee Amount to a Client's Matter, Task or Activity and then the final bill amount issued to the Client will not exceed the Flat Fee contractually agreed upon. The Flat Fee payment amount may be billed each time a Matter, Task or Activity is mentioned in a Client Bill. An Interim Bill also may be generated for a client at anytime in order to collect retainers and advance funds. The improved method and system is directed for use in professional services firms such as law, engineering, architecture, accounting and the like.

EP 3 985 592 A1

## Description

### Priority Claim

The present application herewith claims priority of Provisional Application 61/998,557, which was filed June 30, 2014, and shall be considered as fully set forth herein.

### Field of the Invention

The present invention relates to the field of timekeeping and billing for professional services and consulting firms and more particularly relating to the generation of particular bills such as flat fee, interim and specialized billing formats.

### Background of the Invention

In the current marketplace, there are a variety of computerized time and billing systems for professional firms which are marketed under the following Trademarks: Timeslips by Sage, BillQuick, Clio and others. Some of these systems are computer based while others operate primarily in a cloud computing environment. These systems, however, are not suited to large law firms and professional firms having a global presence, with multiple offices in a plurality of countries which must be linked together for proper billing and financial management. In addition, these are basic programs which do not contain the most up to date features such as transmissions by text, email, fax, computer voice calling, and social media announcements and billing. Other numerous and varied disclosures related to billing and timekeeping are also disclosed in the prior art as shown below.

EP 1,145,162 issued to Ashby discloses the use of a System for processing credit applications, financial and insurance services and administrative and management tools. The System will generate a price quote for insurance and finance and facilitate on line credit application processing. It will further provide detailed reports for finance, insurance inventory, tracking and other administrative matters. It will provide quick quotes for a lease or loan. It will also perform: inventory tracking, insurance tracking, purchase tracking, applicant profiling, targeted marketing, customer satisfaction, etc. The system will collect data for credit, a description of the item being sold, insurance will be offered for the item, licensing and data required for the government will be collected.

Ashby also discloses that the User can be a financial institution, a dealer, manufacturer, insurer or supplier. It can utilize and store credit agreements with customer ratings and interest rates which can be bundled and sold on a public exchange. FAQ's can be provided in the system, and it can provide Quick Quotes on the spot to the consumer. However, this disclosure is directed to car sales and insurance, not timekeeping. The terms it stores are contract terms, contract ID, customer ID, buy rate, the sales rate, dealer markup, payments, cash down, trade in value, lease fee, monthly payments, commission and taxes due. However, Ashby does not relate to professional timekeeping or billing.

EP Patent No. 1,769,452 issued to Allin discloses the use of a computerized system for residential and commercial construction projects to maintain and disburse construction draws during construction. It can track lien waivers, and can prepare, approve, sign and distribute hundreds of checks to subcontractors each month. It also tracks construction change orders. It can manage all of the persons involved in each draw. It manages and generates a construction budget and time line. It also manages payments to material suppliers. It can manage and store the inspection data for each project. It can manage budgets for GC's as well as the subs. It handles ACH payments. Template forms are utilized to facilitate the draw process. Notices can be sent by email, text or voice.

EP Patent No. 2,026,222 issued to Alquier discloses the use of a system and method which allows the addition, modification and deletion of data base fields dynamically without the use of a data base administrator. The system allows the addition and modification of an informational structure dynamically distributed directly via the user interface. It supports different types of entity attributes including, text, numerical information, date ad time, predefined values and binary objects, allows the creation of relational dependancies between information entities (e.g., patent/child), provides flexible reporting capabilities including spreadsheets, slides, documents, timelines, etc.; it allows a configurable data entry interface; it allows importation of data from external sources; it allows full text searches; logs modifications for an audit trial (important for pharma and med devices); includes email notifications. It allows for a user interface that is flexible and configurable. The system uses template items, coding and tables to accomplish these purposes. However, it is not directed toward time tracking and billing generation.

U.S. Patent Disclosure No. 2003/0120538 filed by Boerke, et al. discloses the use of a method for tracking progress on a task by dividing the period of time into a plurality of timeslots and determining a target number of subtasks to be completed during each timeslot. For example, the time slots may be divided into 15 minute increments. The system only tracks the number of subtasks completed for each timeslot. The method also keeps track statistically of variances in subtasks completed between workers. The task may include any type of work. The process may be used for planning purposes, i.e., as a planning tool such that management can plan and process daily or monthly work shifts according to the work to be done for particular tasks and subtasks. This helps a supervisor spot and correct negative variances in worker performance. The progress can be logged into a computer or worksheet or in paper format. Problems are also noted by the method for correction to improve performance by variance cards.

U.S. Patent Disclosure No. 2013/00090968 filed by Borza, discloses the use of an employee management and scheduling method which is directed to ensure that adequate personnel are present as required and that statutory requirements are met and costs are tracked and minimized. The Borza disclosure is also directed at apps for management cell phone usage wherein managers can track employees, theirshifts and their skills and managing same. This allows for real time changes by employees that are sick or have not shown up for work. The locations may also be tracked. Scheduling software is used to manage multiple employees at multiple locations. From one screen, a manager may create, edit and delete shifts and also have access to other aspects of managing the organization staffings with information aboutpositions, teams, skills, etc. being provided. The System can print Shift Assignment Reports and Employee Reports. However, this disclosure is directed toward scheduling employees and not tracking their time or billing for theirtime.

U.S. Patent Disclosure No. 2012/0233044 filed by Burger, et al., discloses the use of a Method and System for labor project management and costing which may run on a cell phone app to monitor employee activity, identify faulty activity and manage allocation of labor resources. The app, as installed on an employee cellphone, allows the employee to travel to various job locations and record the activities at each job location. The employee may log into or out of the timeclock app installed on the employee's cellphone. The system can be used to monitor managers and administrators as well as employees. The system can be used to transmit payroll information. A flag may be generated if the worker travels outside the permissible areas allocated to his role. The system stores employee photos. Job locations, routes, job codes, SIC codes, etc. may be entered into the back end by an administrator. The system also generates reports, and has a" Dashboard" or summary report simply show who is on the jobe, what time they arrived and GPS confirmation of location. The LPM platform may also be operated in the Cloud.

U.S. Patent Disclosure No. 2014/0258057 filed by Chen discloses the use of a system and method for tracking the User's time of a mobile device for the purpose of billing clients. The system is provided with a digital timer which is launched at the time of arrival and then stopped when the employee leaves. The system is directed at tracking time on a mobile device or app. It tracks time sending texts and emails. Time is recorded as soon as the professional receives a voice mail, phone call, text or email. The user can also input notes with the system's time recording and entry. The app automatically looks up in the user's contacts list whether the call or email or text coming in is from a client, and if so, it begins to track it for billing purposes. If not in the contacts registry, the user is alerted at the time and can add the contact as a client to be billed.

U.S. Patent Disclosure No. 2013/0290154 filed by Cherry, et al. discloses the use of the system and method to manage employees at a plurality of jobsites by providing a database wherein a set of job site data is stored therein. Employee devices may collect a set of time punch data and photos to store in the system. Management apps are used on supervisory devices to monitor the job site data and employees and validate photos and activate employee apps. This system is shown operating on a Cloud environment. The app will operate with a web browser, WiFi or on GPS authentication. The system essentially operates as a time tracking system for job sites. The system stores time photos of the employees at check in and check out. The system also records a job number, a job phase and a cost code. The system also has a payroll calculator communicating with a payroll service.

U.S. Patent Disclosure No. 2001/0042032 filed by Chrawshaw discloses the use of a system for capturing, processing and reporting time and expense data which can include flat fee billing, maximum fee billing and will also allow for discounts and write offs. It can be used for a wide range of businesses. A client will not have access to internal data of the company. The system will produce bills, expense reports, time sheets, proposals and project tracking. This appears to be a conventional program for law firm data which is run on a local server for one location. The system may produce various reports as needed. Bills may be delivered by email. The program will create envelopes for the bills. The system will also create budgets for the client.

US Pat. No. 6,038,547 issued to Casto discloses the use of a construction tracking and payment system for use by contractors and subcontractors so that work may be tracked and payment may be timely made after the work is completed and inspections performed. The system complies with AIA requirements. The system may be implemented on a handheld computer. The system will break down a construction job into various elements, and then a contractor or subcontractor will be given a coy of how the site is partitioned, then each contractor or sub is responsible for submitting applications using the partitioning to ensure uniformity the architect desires to impose. The system can import and use CAD information on the job site. The system uses coding approved by the AIA.

US Pat. No. 6,747,679 issued to Finch, II, et al. discloses the use of a time keeping and expense tracking server including a server that implements computer instructions that define logic for building GUI screens according to user instructions. The user can implement and design the screens needed for the tasks of time keeping and expense tracking. The system may be implemented on the Cloud or Internet with a laptop or wireless device desired. The GUI screen may be customized on a company by company basis, a department by department basis, etc. The system also includes security wherein projects and project codes are only viewable by certain level employees.

US Pat. No. 7,343,316 issued to Goto, et al. discloses the use of a network based shift scheduling system for generating temporary shift workers. It is sent over portable terminals over a network. The system is set to secure and provide work for a plurality of workers. Workers can also submit cancellations or shift changes via the system. The system also accommodates email for communication purposes. The system may also recruit new employees. The system stores the name, age, sex address, mail address and qualifications of the employee, the workable time slots, the type of job, hourly wage, etc.

WPO 2014/016796 filed by Gupta, et al. discloses the use of a system and method for employee tracking in a mobile communication device wherein dynamic location reports may be generated in real time or near real time. The system is directed to door to door delivery or pickup sales forces. The System uses a mobile app on the employees cellphone to conduct the tracking of the employee. The system will raise flags if deviations from tracking occur. The system uses Blue Dophil software to analyze where employees should be performing tasks and produces flags when paramaters gathered fall outside permissible ranges. These flags are sent to management via text oremail.

US Pat. No. 6,832,176 issued to Hartigan, et al. discloses the use of a method and system for tracking and reporting time spent on tasks in different application on the end users' computers while the tasks are bing performed. It may track the opening and closing of files automatically and send reports and messages directly to and from other applications. The software may also suggest categories for each task based upon at least one criteria. The system may use MS Outlook for assistance in tracking tasks and transmitting reports. It is directed toward attorneys and accountants. The system may track fixed fees and use data collected for evaluating production or sweat equity bonuses to employees. The system may track a plurality of projects or research endeavors. It can track the time spent by accountants on spreadsheets. It can track the time engineers spend on designing computer code or simulating circuit designs, etc. It mentions the use of Timeslips for professional time tracking and TABS 11 for tracking other professional time spent on tasks and projects. The system tracks time on computers used by the professionals involved. The system presents toolbars to assist in tracking time. The system will track time spent in applications such as MS Word, Excel, Outlook, Power Point, etc. It will track when the application is open, active and then closed. It can score and rate the usage of these various types of software automatically. Various reports may be generated by the system for management usage on a periodic basis, as desired.

WPO Patent Disclosure No. 2015/079776 to Hishiki discloses the use of a work state management system that manages clock in times for drivers ofvehicles that work overnight shifts and calculates the appropriate breaks for the driver so that the driveris not over tired.

U.S. Patent Disclosure No. 2014/0344,122 filed by Hodgin, discloses the use for billing for time spent in an IM session by a service person wherein the system can automatically bill a project/client by searching for the name of the client or project within a text or instant message or a series or session of same. If the system cannot find the name of a client or project, then the user will associate the IM session with a new project or client so that the client may be billed for the IM session with the client. Or the System may default into a common template for the User's typical instant messaging sessions.

U.S. Patent Disclosure No. 2009/0006228 filed by Hodgin discloses the use of a time tracking system and method similar to the IM system noted above by Hodgin. The Hodgin system will also store a list of prior associations to Projects and Clients that are built on the same or similar words and phrases.

U.S. Patent Disclosure No. 2002/0154122 filed by Jackson, Jr. discloses the use o an improved system for employers, referral agencies, consultants and independent contractors to hire and manage employees and provide tax reports and wage reports. The Jackson, Jr. System may track and manage employees, salaries and experience to provide optimal benefits to the employer. The System produces computerized scheduling, billing, record keeping and payment templates. It provides a listing of invoices for the User to refer to. It consists of providing invoices for contractor services and performs its functions in a cloud based system.

US Pat. No. 8,838,486 issued to Kong, et al., discloses the use of a time manager interface on a communications display device which allows a worker to keep track of her or his time and activities. The time manager keeps track of time spent logging into and out of the system. This was important in years past when boot time were quite long. It discloses the use of scanning in employee badges to track work time. This disclosure is directed toward a system for checking work in and work out time. In one version of an embodiment, the System is located in the field. It discloses the use of GPS in the field to create an audit trail of time worked. Biometric information may be used for the system to identify the worker. It can be used nationwide for multiple local offices. It may be coupled to communicate with employee hand held devices. It can work over WiFi and cellular networks. It can store: DOB, SSN and other employee details. It can be used with a barcode or QRT code. It can be used in connection with microphones, cameras and scanners. For remote sites, the system can check the IP address of the computer or hand held device to ensure security in the system. The system can also be used to check work schedules to lock an employee out of the system when not scheduled. When an employee arrives at a worksite, upon verification, one or more emails or text messages may be sent to management for that site. Employees may view the work schedules of other employees if granted permission to do so. In doing so, employees can request work dates and exchange them with others. The system can differentiate between exempt and non exempt employees. The system can display messages to employees during time in and time out registration.

U.S. Patent Disclosure No. 2012/0278211 filed by Loveland discloses a system for remotely tracking and monitoring Worker's activities via mobile phones orother mobile tracking devices. This system monitors continuously whether or not aworker is present at a worksite.

WPO 2010/11652 filed by Manser discloses a System and Method for tracking employee performance. The Manser system provides a user interface to allow the user to assess the balance of hard skills and soft skills of an employee, evaluate the employee's performance in a plurality of categories and compare the average cost for the job in the marketplace to the cost of the employee being evaluated. The system also analyzes the average cost of a similar job in the relevant marketplace during employee reviews. The program continually monitors the value of an employee to the employer to determine ROI at any given time. The system can be applied to direct hires, contractors, temps or any employee relationship. The system allows the identification of both over achievers and under achievers. The system provides a means by which employees may determine how to get the highest ratings via their work efforts.

EP 2338293 filed by Molotsi discloses a system for time tracking for employers on a mobile computing device. The system involves providing an event manageron a mobile computing device for managing a plurality of events which are then synchronized to a server. The system will automatically track time and estimate time spent on a task by the worker. This system logs events in the user's calendar, in emails and texts. Timestamps for events and mapping for the events are provided. A client list and data may be provided in one or more files or databases. The system may communicate with a worker's smartphone. The user may be able to open, edit delete, review or manage all automatically created event records. The system may use information in the text, email, calendar, to automatically create a time tracking record for the user. In addition, the system may automatically convert emails, texts, meetings on a calendar to a time tracking event by means of a pop up box to the user.

WPO 2008/061146 filed by Neveu Holdings, LLC discloses a system and method for remote time collection for employee time on job sites. The system can collect an employee's name, picture, title, contact information, health and/or safety information, skill information, etc. The system can also collect for each employee a project name, project identification, location, project start date, project supervisor and detailed comments about project activity. The system can also collect information on vendors, such as name, address, phone, contacts and type of vendor. The system can also use GPS information and compare it with when the employee is supposed towork. The system collects biometric information to identify an employee. In one embodiment, a time collection database is configured to receive, process and store information related to projects such as name, identification, location start date, supervisor, etc; vendor's name, address, number contact, subcontractor type, etc. project supervisors, tasks, employee titles, departments and employee time records. Office data collection may include: job site, task and project information via a wireless connection. Encryption is used to transmit data to and from the remote site. The system may also include a field scheduling module to schedule a job for a particular job site and fora specific remote user(s). The user can edit hours and view commentsfrom remote workers. Remote monitoring can record task completion, view management comments and ask for management assistance and crew responsibilities.

U.S. Patent Disclosure No. 2015/0081381 filed by Okoba discloses a system and method for recording time which may be used on a device, software or application. It may be used by logging into a plugin or extension. The time recorded may be exchanged for vouchers which may be redeemed or traded with other members. A user will register with an ID and password to log into the system. The system may record device activity, software activity, application activity, keyboard activity and mouse activity. The user's time spent in the browser or on a video game may be given a redeemable value. A database may store the recorded activity for further analysis. The system will work on computers, tablets, cell phones, television, games, digital books, exercise apparatus, web browsers, mobile apps and video games. Vouchers may represent monetary value, promotions, products or services. User name and password may be stored in system cookies. The system can capture video game or browser activities, keyboard or mobile keyboard activities. The activity spent in the system may translate to purchasing power so that the user may receive optimized value from their activities and the system may deliver purchasing incentives at the right time and place and for the right product or service. A business maybe selected as a favorite from user activity on the system.

U.S. Patent Disclosure No. 2015/0081487 filed by Porter, et al., discloses the use of a time tracking and productivity system including a tracking component to locate an employee to record time spent at various locations. This system is designed to monitor and improve coordination of patient care, and in particular, to limit the number of patient hours a resident physician can work per week. When the rulesimplemented by the ACGME are violated, strict fines and probations or suspension may be implemented. This system is primarily concerned with tracking an employee's location and work hours. This system can include cloud performance. It is the movement of an employee within predetermined boundaries that will trigger the recording of a new event. It can track time in a patient's room, a brake area, doing paperwork, etc. A GUI is used on handheld devices. The system can also use tags that interact with RF signals. The system records employee info and FRIDA numbers, the resident program director, the resident coordinator, start and end times for resident shifts, house calls, in house calls, night float, etc. If moonlighting is permitted, the system can track moonlighting hours as well. It will store vacation schedules and rotation schedules. The shift log can include a short trip buffer. Automatic warnings of over limit hours are sent to management for the residents via text, phone, email, etc.

US Pat. No. 6,185,514 issued to Skinner discloses a method and system for automatically collecting and analyzing information regarding time and work performed on a computer. It uses a data collector for monitoring certain potions of a worker's computer activity and an analyzer for showing which portions of the activity were continuous work activities, and the system will categorize the work into preset projects and tasks within a project. The information is periodically written to data storage. The system is directed toward telecommuters. The system automatically excludes time where there was no activity on a computer. The system is used to forecast future projects with reduced financial risk. The system includes the automatic documentation of time. The data stored on the system is encrypted so that it cannot be altered by the user. The data collector automatically collects the activity on a mouse and on the keyboard of the computer user. The system creates a log file of work activity. A hardware abstraction layer can interface with phones and other devices and can be used with pointing devices such as a tabled or mouse. The system keeps track of activities within open multiple windows on a computer.

US Pat. No. 8,209,243 issued to Smith, et al., discloses the use of a system for performing real time labor management and timesheet reporting which is adapted to wirelessly transmit timesheet information. The portable devices may be dedicated to tracking time only and cannot perform other computing functions. The system includes a portable electronic punch system that is capable of communicating with the labor management system via text. The system allows user to manage work schedules and report timesheet information without requiring an internet accessible computer. The units send timesheet information directly back to the server for analysis via wireless network. The text messages may contain: employee ID, clock in time, clock out time, break times, days worked, days off and other work related information. Newuser information may be set up by text message into the timekeeping system. The system may operate over any wireless system, i.e., GSM, GPRS, CDCP, Bluetooth, Wifi, etc.

US Pat. No. 9,020,848 issued to Ridge, et al., discloses the use of a method for tracking time and location of an employee according to a predefined schedule and it may utilize software to track the presence or non presence of: a NFC (near field communication), BLE (Bluetooth Low Energy) or other wireless device. The system will track the presence of an employee in a geofenced area. It will also track employee time and other data to log that into a payroll system. The low energy device then communicates data to a server if a signal could or could not be detected. It will also allow for manual clocking in and out in case of failure of the back end server. The system can also be used for security purposes. The system can function in realtime or in batch request mode. The information may be a time stamp, a status or location of a mobile device. In one embodiment, the system can be used for employees for a retail store or restaurant. The system can utilize Bluetooth tapping to log in. It may be used at a trade fair both by tapping the device to a NFC communicator. It maybe used in connection with a mobile time clock app. It can be used to advise management when non authorized employees enter a restricted work zone. Management may input which work zones are restricted and which are not.

WPO Disclosure 2015/029073 file by Shirish discloses a system and method to measure aggregate and analyze time, effort and productivity by reviewing time spent on activities such as calls, travel, lab work, meetings, discussions and remote visits. PD's or Presence Devices may be used to track employee location. The system can track average daily work patterns. It can track work activities and private activities. It can track emails and browsing. It can account for flexible work hours, use of multiple and different types of computing environments (PC at work and home, smartphones, tablets, etc.) It can capture files, folders, web links, etc. It can make all personal endeavors password protected and private. It is intended to track effort and performance 24/7. It can provide modules that promote work focus and minimize distraction by awarding performance points, badges for consistent performance and progress in performance goals. It can measure improvement by creating an n-dimensional effort data cube and include analytics for custom reports. The system can go into self improvement mode to set goals for self improvement and activities related thereto. It can be used at work whenever and where ever. It has a time tracker for all online time. It has a Merger to merge offline and online time effort mapping. It has an interference engine to determine Work Patterns for employees, leave taken, work done on holidays, desk or supervisory or travel oriented job, etc. The System will also present organization goals and analytics, top performers, work patterns, recent deviations from work patterns. A Collector module measures data to improve the exact work effort at the individual level throughout the day. The System can be used on SAS (Software as a Service) and it maybe hosted in a cloud-computing environment.

U.S. Pat. No. 2012/0173297 A1 disclosed by Styn, et al., a method and system for task tracking and allocation is disclosed. The disclosure provides for a method in which an individual may create a set of instructions operable to perform a set of tasks in a computer readable medium. That set of tasks may comprise maintaining a database, generating a first interface displaying subjects associated with individual issues, and a second interface with notes specific to an issue selected by a user. The instructions stored in the database may be implemented accordingly and the computer may maintain a plurality of relationship records containing data indicating relationships across folders. The disclosure also mentions the prior use of MS Project and ERP systems that employ Gantt charts, milestones and tasks and subtasks with complex dependencies. This system keeps track of billable items. However, Van Styn is not a true timekeeping and professional billing system.

US Pat. No. 2014/0108644 A1 disclosed by Zaents, et al., a method and system for tracking time in a web-based environment is disclosed. The method of tracking time involves a web-based application to track time associated with several records. Identifying a record in an active state, generating a record associated with the active record and activating a timer, and having the ability to end the session in response to an indication that the record is an inactive state. The time-tracker may be hosted in a cloud-computing environment. The time-tracker may calculate the entire duration of the record by continuously adding the active times together. The method may detect a predetermined total duration of time has been exceeded and provide such indication to user. This disclosure mentions timekeeping, billing and using a web browser and multiple tabs to record time for multiple clients when a professional is switching back and forth between projects. It is useful for billing, accounting and auditing. More than one user can log into the system on a computer and track time her or his time on the same computer. It also teaches the use of sub-tabs to track time. A stop watch type button is used to switch on and off the time tracking, or time is tracked as the user switches browser windows.

However, none of the above patent disclosures teach or suggest improved billing and timekeeping systems which are able to directly edit work- in-progress sheets, draft and final bills and automatically have those changes reflected in the original work data entries. There are also no timekeeping and billing systems seen in the marketplace that can automatically predict cash flow, partner profits and allow clients to view bills in real time. These and other additional objects and advantages are readily derived from the disclosures and drawings provided herein.

**Summary of the Invention**

The present invention consists of an improved billing system for professional firms, companies and business associations wherein the time data from individual timekeepers may be recorded and transferred to a main billing system at regular intervals. For the most part, timekeeping data generally consists of: Work Date, Timekeeper ID or Number, Client ID or Number, Matter ID or number, Work Phase, Work Location, Physical Work Location, Area of Practice, Hours (in tenths or quarter hours), Activity Code, Task Code, Flat Fee Code and a Detailed Description or Narrative. In addition the user may be provided with a comments field associated with a particular Timesheet. The present invention is further provided with an interface which can transfer local data to regional or a nationwide system, as desired or selected by the user thereof.

The present inventive system will also allow the user thereof to record his or her time on non local systems. The present invention is further provided with security roles such that only certain Timekeepers may access and record time for certain clients. The present invention will allow the user thereof the ability to record

Time in $10^{th}$s of an hour or quarter hours, and it will allow the user the ability to undo time in case of error. In addition, the present invention will allow the user the ability to transfer or close out time locally to transfer the Timekeeper's data to the global system. In addition, the present inventive system will close out time, and even hold Time Entries until the End of Month accounting has been finished. In addition, the present invention can analyze Timekeeper data for errors and flag those errors to the user thereof.

A further feature of the present invention is that it will be able to self correct Time errors and issue notices automatically to the Timekeeper or Time entry staff and have them agree with the changes, reject the changes, or enter new data.

In addition the present inventive system will allow the user thereof to create User Defined Fields which are associated with the Time Entry. In such a manner, notes can be passed from Timekeeper to staff and to the billing department with increased efficiency.

The present inventive system will also allow the user to mark the Time Entry field as confidential, which is necessary for certain countries. The Present Inventive system will allow the user to display any Activity Codes based upon the Task Codes selected by the Timekeeper.

The present inventive system will check the data entry for time which is outside of any preselected value by the user and automatically correct the error in time entry and send a message by email or text to the Timekeeper. In addition, the present inventive system will be able to correct a time entry after it has been uploaded to a regional, national or global level. However, after Time has been transferred to the national level. Any Time edits at that point can only be accomplished at the global level.

The present inventive system may also be used to display the Task Codes and Activity Codes list attached to a particular Matter. In addition, the user will be able to correct Time after it has been uploaded to the regional, national or global Billing System. The present invention will also be able to check if total time for the day falls outside a particular range preselected by the firm; for example, the total time should be between no more than 8 to 18 hours for a given day. Advanced corrections are corrected at the regional, national or global level.

The present inventive system is also capable of handling flat fee billing. Flat fee billing is where services rendered are priced at a flat rate per task, activity, matter or time period. The flat fee can be set to include fees and/or costs associated with the matter. Typically, a flat fee schedule is published for each country in at least two currencies and for each piece of work a corresponding unique code is created. The code's attributes, such as value and frequency determines the pricing for the flat fee.

Flat fee billing follows the same steps as standard billing where time and costs are recorded for the work performed, draft bills are generated, reviewed and approved by the Billing Partner or Client Originating Partner before a final bill is generated and sent to the Client. However, for this process to work correctly, flat fee codes must first be created in a regional, national or global System with pricing and frequency. These codes are downloaded into the time entry and cost recovery systems. When a draft bill is generated, ERP validates the flat fee code and values the work based on the flat fee value.

The present inventive system is able to bill a client for a flat fee agreed upon between the Client and Firm after the work is completed, but the Time may be put in at a later date. The Client will receive a bill marked paid in full, and then the time may be sent out to the client at a later date. In such a manner, the Billing System may be linked to a docket system wherein as soon as a complaint is filed, a patent is filed, a trademark or copyright is filed, the bill can be sent out, or if prepaid, it will be marked paid in full. Then, Time spent on the Matter, Phase, Activity or Task can be recorded, and if desired, a detailed statement of Time spent may be communicated to the client at a later date. Whenever Time is finally entered on a flat fee matter, it is used to proportionally allocate the fees collected to the Timekeeper performing the work for the purposes of normalization or profit sharing.

Below are three types of flat fee billing models:

 **1) High Volume Single Matter.** In this model a flat fee code is created for each Task. The fee code identifies the description, value and frequency. The codes are generated from a system used by IP management and sent to the regional, national or global system.

 **2) Medium Volume One Matter.** In this model, a separate flat fee code list is published for each country. The fee schedule is published in two currencies, USO an local. Once this flat fee code list is attached to the required Matters, they are made available for time entry.

 **3) Client** - **Specific.** In this model, a Client-specific flat fee schedule is utilized. This fee schedule is available to the regional, national or global system and is attached to the required Matter for a period of time. Generally, a separate Matter is created based upon the Client's preferred Matter numbers.

In the above examples, the system is easy to implement and use to generate a draft bill based upon differing flat fee models. The flat fee can be distributed equally across all Timekeepers that have worked on the flat fee according to the hours they have spent on the Matters covered by the flat fee for a given period of time. The present system will also be able to maintain a list with the set of services for which a flat fee was billed. The System will also be able to automatically generate a list containing all of the flat fee Matters, Tasks and Activities which have a flat fee arrangement associated with them.

The Timekeeper, when entering time, will be able to select from a list of Tasks, Activities and Matters which are associated with Flat Fee billings. The present inventive system will allow the user thereto to select a flat fee from a drop down box or menu containing a listing of flat fee tasks and activity codes. The present inventive system will also allow the user thereof to select a flat fee Activity or Task which is within a valid date range.

The present inventive system will also be able to specify whether or not any hard or soft costs are included by the coding of Tasks and Activities. The present inventive system will be able to generate flat fee bill without any time having been entered, only flat fee code is entered on bill and bill is generated for the value of the flat fee. The payment collected will be allocated to the timekeepers later on when the actual time is entered. The present inventive system also has the capability to capture a plurality of Flat Fee Codes and preserve their integrity. The present inventive System will have the additional capabilities of attaching to a System Code: 1) one flat fee billed per Matter; 2) One flat fee per Task and 3) one flat fee billed each time the code is mentioned in a draft or final bill. The System will also be able to check or validate the Work Date of any time entered against the permissible dates of any flat fee arrangement.

The present inventive system may also generate a bill without Time and Costs and can be issued at any time during the life of a Matter. Interim bills are generated when the Firm needs to send a bill out for a set amount regardless of whether the Time has been entered or not. In jurisdictions that have Taxes for services rendered, the Tax may be calculated and applied to the interim amount. When a payment is made to an Interim Bill, accounts receivables is relieved and a credit goes to a "Fees to be Allocated" General Ledger account or a IOLTA trust account. For Fee allocation purposes, the Collection is treated as a Collection for the Billing Partner or the Client Originating Partner. At some point during the life of the Matter Time and Costs are applied to the Interim Bill and the Timekeepers will receive the appropriate collected allocations. If Time and Costs are applied to an unpaid Interim Bill, no Fee allocations take place. An Interim Bill is deemed to be an unapplied Bill when no Time and Costs have been applied. An Interim Bill is deemed to be applied when Time or Costs have been allocated. The same approval process is applied to an Interim Bill as is done for a Standard Bill generated monthly to a client. An interim Bill may also be used to invoice and collect a retainer agreement amount even before any work has been done. In those cases, the funds are completely allocated to a "Fees to be Allocated Account" or an IOLTA account. In other cases, where some work has begun, but the Client Payment exceeds the work done, all is allocated to an IOLTA or other trust account for a predetermined period of time, e.g. 10 to 14 days, etc., but at the end of that time period, the funds may be transferred to the company or firm's operating account and the Timekeepers receive the appropriate credit toward their leverage accounts.

In addition, when funds have been received from a client for the payment of an expense or disbursement, these funds may also be deposited into a trust or IOLTA account until they have cleared, at which time, when payment is due on the expenditures to be paid on behalf of the client, the System will check first to see if the funds have cleared, before transferring the funds to an Operating Account where a disbursement will be made to secure third party goods or services or fees on behalf of a client. The System will not release funds from a trust or IOLTA account for a minimum number of days, e.g., seven to ten days, to ensure the client's funds have cleared. If the payment is due immediately, the funds will be immediately released at the end of the seven to ten day period.

Although the foregoing Description described use of the present invention with respect to companies and firms, the present invention may be used on a wide range of businesses and business ventures, including, but not limited to: businesses, business ventures, partnerships, corporations, NFP's (not for profits), organizations, Swiss Veriens, GmbH, etc.

Although the foregoing summary has set forth specific embodiments of the present invention, numerous other additions and substitutions may be found to be common in the prior art and those alterations obvious to try shall be considered as if included in the above summary as if set forth fully herein.

According to one aspect, there is provided an improved System for Flat Fee Billing comprising entering at least the following Time Data: Work Date, Timekeeper ID, Client ID, Matter ID, Matter Description, Client Costs, an Hourly Rate and Time Worked; providing a CPU and data storage, the improvement comprising creating a Flat Fee Amount associated with one or more of the following groups consisting of: a Matter, Task or Activity, creating a Bill Total comprising all the Time Worked multiplied by the Hourly Rate plus Client Costs, providing a Bill Reduction Amount which equals the Bill Total minus the Flat Fee Amount and generating a Flat Fee Bill listing the Bill Total, the Bill Reduction Amount and the Flat Fee Amount to the Client.

According to one embodiment, a Client is provided with a plurality of Flat Fee Bills and the most recent Flat Fee Bill has a summary of all Bill Reductions Amounts previously afforded the Client listed thereupon.

According to one embodiment, System for Flat Fee Billing according to Claim 1 wherein the System uploads Time Entries submitted by a Timekeeper to an off site Server where they are stored and the Bill Total is generated.

According to one embodiment, the System further provides the user with one or more of the following, Task, Matter and Activity, and the System assigns a Flat Fee Code to at least one of the said Task, Matter and Activity.

According to one embodiment, the System is provided with a number for Flat Fee Time and Flat Fee Costs and the System generates a Bill Reduction Amount such that all billed amounts to the Customer all the same or less than the Flat Fee Time and Flat Fee Costs to be billed to the Customer.

According to one embodiment, the user may mark some or all of the Work Data entries as confidential and those Work Data entries may then only be viewed by persons preselected with access to those Work Data entries.

According to one embodiment, the user may create a listing of Task Codes and Activity Codes under a particular Matter.

According to one embodiment, the System will read the Flat Fee Billing Code and perform one or more of the following tasks selected from the following group: bill the Client a predetermined amount each time a Matter is mentioned in a bill; bill the Client a predetermined amount each time a Task is mention in the bill and bill the Client a predetermined amount each time the Activity is mentioned in the bill.

According to a further aspect, there is provided an improved Billing System for Interim Billing comprising entering at least the following Data: work, Timekeeper ID, Client ID, Matter ID, Matter Description, Client Costs, and Hourly Rate; providing a CPU and data storage, the improvement comprising: generating a bill other than at the end of each fiscal month's end, incorporating charges for Retainer Amounts to reserve attorney time in the future; upon receipt of payment the Inventive System automatically depositing Client Funds into a Trust Account if the Payment Received exceeds the Balance Due for non Retainer Funds.

According to one embodiment, the System will calculate Client Due balances at periodic frequent intervals and transfer funds automatically from a Trust Account to an Operating Account when both 1) the amount of the Client Payments is at least the Client's total Fees and Costs and 2) a predetermined period of time has elapsed after Client Fees and Costs exceed Client Payments.

According to a further aspect, there is provided an improved Method for Flat Fee Billing comprising the steps of: entering at least the following Time Data: work Date, Timekeeper ID, Client ID, Matter ID, Matter Description, Client Costs, an Hourly Rate and time Worked;

providing a CPU and data storage, the improvement comprising the steps of: creating a FlatFee, Amount associated with a Matter, creating a Bill Total comprising all the Time Worked multiplied by the Hourly Rate plus Client Costs; providing a Bill Reduction Amount which equals the Bill Total minus the Flat Fee Amount and generating a Flat Fee Bill listing the Bill Total, the Bill Reduction Amount and Payment Due to the Client.

According to one embodiment, the improved Method for Flat Fee Billing comprises the additional steps of: providing a Client with a plurality of Flat Fee Bills; generating a Total for all prior Bill Reduction Amounts, displaying the Total Bill Reduction Amounts on at least one Current Bill to the Client.

According to one embodiment, the improved Method for Flat Fee Billing comprises the additional steps of: uploading all Time Entries recently generated by a Timekeeper to an offsite server for further processing.

According to one embodiment, the improved Method for Flat Fee Billing comprises the additional steps of: the System providing a Task and an Activity, and the System assigning a Flat Fee Code to at least one of the following from a group consisting of: Task, Matter and Activity.

According to one embodiment, the improved Method for Flat Fee Billing comprises the additional steps of: providing a Total for Flat Fee Time and Flat Fee Costs and the System generating a Bill Reduction Amount so that the Payment Due for that Client is the same or less than the Flat Fee Total.

According to one embodiment, the improved Method for Flat Fee Billing comprises the additional steps of: marking at least one of the Work Data entries as confidential, allowing only employees with preselected access to view those Work Data entries.

According to one embodiment, the improved Method for Flat Fee Billing comprises the additional steps of: generating a listing of Task Codes and Activity Codes fora particular Matter.

According to one embodiment, the improved Method for Flat Fee Billing comprises the additional steps of: the System reading the Flat Fee Billing Code, the System performing one or more of the following tasks from the group consisting of: billing the Client a predetermined amount each time a Matter is mentioned in a bill; billing the Client a predetermined amount each time a Task is mentioned in a bill; and billing the Client a predetermined amount each time an Activityis mentioned in a bill.

According to a further aspect, there is provided an improved Method for Interim Billing comprising entering at least the following Time Data: Timekeeper ID, Client ID, Matter ID, Matter Description, Client Costs, and Hourly Rate; providing a CPU and data storage, the improvement, comprising: generating a bill other than at the end of each fiscal month's end, incorporating charges for Retainer Amounts to reserve attorney time in the future; automatically depositing any Client Payments into a Trust Account if the Payments received exceeds the Balance Due for non retainerfunds.

According to one embodiment, the improved Interim Billing Method comprises the additional steps of: calculating Client Due balances at period frequent intervals; transferring funds automatically from a Trust Account to an Operating Account when both 1) the amount of the Client Payments exceeds the Client's total Fees and Costs, and2) a predetermined period of time has elapsed after the client has received a bill where the Client Fees and Costs exceeded Client Payments.

According to one aspect, there is provided an improved Billing System for Flat Fee Billing comprising entering atleast the following data: Invoice creation date, Timekeeper ID, Client ID, Matter ID, Matter Description and Fee Rate; providing a CPU and data storage, the improvement comprising creating a Flat Fee Amount associated with one or more of the following groups consisting of: a Matter, Task or Activity, creating a Bill Total, comprising the flat fee without entering any time.

According to one embodiment, the Client has made a payment into a Trust account for the purposes of paying a third party for expenditure in the future, and the System has means to place a hold on the funds until a period of time has passed, after which when payment is due the third party, the funds in trust will be transferred to an operating account for the purpose of paying the third party bill.

According to one embodiment, the improved Interim Billing Method of Claim 9 further having the steps of; the client paying the Company to make a deposit into the Company's Trust Account, the Company making the deposit, the Company placing a hold on the funds until they have cleared, and the Company transferring the payment to its operating account for the purposes of making the third party payment on behalf of the Client when the hold has been lifted.

According to one embodiment, the Flat Fee billing System further has a docketing system, the docketing system containing events wherein a particular billing activity has been completed, the completion of the billing activity is automatically transferred to the Billing System, the Billing System then creating a bill to the client base upon a flat fee for the billing activity.

## Objects of the Invention

Thus, it is one primary object of the present invention to provide an improved Billing System which allows the transfer of Time Entries consisting of: Work Date, Timekeeper ID or Number, Client ID or number, Matter ID or number, Work Phase, Work Location, Physical Work Location, Area of Law, Hours (in tenths or quarter hours), Activity Code, Task Code, Flat Fee Code and a Detailed Description or Narrative to be uploaded from a local office to a regional, national or global office for the purposes of Billing.

It is still a further primary object of the present invention to provide an improved Billing System which allows the user to create custom comment fields to keep notes for the Timekeeper or to transmit to staff or the billing department.

An additional primary object of the present invention is to provide an improved Billing System which allows only certain users according to their identity or staff position (i.e., billing attorney, client originating attorney, partner, associate, paralegal, secretary, etc.) to view the client information according to the security level assigned their identity and/or position at the firm or company.

Still a further primary object of the present invention to provide an improved Billing System which allows the system to hold all Time Entries at the End of the Month until the End of Month Accounting has been completed.

A further primary object of the present invention to provide an improved Billing System which allows is to provide various flags and controls so that timekeeping errors are easily spotted and corrected by both the user of the system, and the system itself.

An additional primary object of the present invention to provide an improved Billing System which allows the System to identify common timekeeping errors (negative value, excessive value, value not in alignment with normal billing history, etc.) and to make corrections and send the approval or notices to the Timekeepervia email, text, twitter or any other electronic method.

Still a further primary object of the present invention to provide an improved Billing System which allows the user or Timekeeper to mark some or all fields utilized as confidential such that only certain employees are able to view the field thus identified as confidential.

It is yet a further primary object of the present invention to provide an improved Billing System which allows the user to make lists of Task Codes and Activity Codes according to a particular Matter.

An additional primary object of the present invention to provide an improved Billing System which allows the user to bill on a flat fee basis according to Matter, Task or Activity codes present in the inventive system.

Still an additional primary object of the present invention to provide an improved Billing System which allows flat fee codes to be created and implemented in the regional, national or global billing system.

A further primary object of the present invention to provide an improved Billing System wherein the present inventive system may create and implement flat fees by: high volume single matter criteria, medium volume single matter and a client specific matter.

Yet an additional primary object of the present invention to provide an improved Billing System wherein the flat fee may be easily distributed across all timekeepers that have worked on the flat fee matters according to the time each Timekeeper has spent in relation to all the other Timekeepers working on said flat fee matter.

Still a further primary object of the present invention to provide an improved Billing System wherein the Timekeeper may enter time after selecting from a list of Tasks, Activities and Matters which are associated with a particular Flat Fee billing process.

An additional primary object of the present invention to provide an improved Billing System wherein the flat fee billing process will allow the user to specify whether any hard or soft costs are to be included into the coding of Tasks and Activities.

Yet a further primary object of the present invention to provide an improved Billing System wherein the System may attach to a flat fee code one of the following: one flat fee billed per Matter; one flat fee billed per Task; and, one flat fee billed each time the code is mentioned in a draft or final bill.

Still an additional primary object of the present invention is to validate the Work Dates of any time entered against the valid dates for entry of a Matter to be billed in a flat fee format.

A further primary object of the present invention to provide an improved Billing System is to generate interim bills without triggering an end of month accounting close out for that client. This type of a bill may be generated with or without Time and Costs.

Yet an additional primary object of the present invention to provide an improved Billing System is to generate an interim bill to request a retainer amount which is then deposited to a trust or IOLTA account on behalf of the client.

Yet a further primary object of the present invention is to put a hold on funds held in an IOLTA or trust account until they have cleared, then immediately prior to payment of goods, services or fees on behalf of a client, they will be transferred from the IOLTA or trust account to an operating account for the purposes of making a payment upon same.

Still a further primary object of the present invention to provide an improved Billing System wherein an interim bill may be generated for clients that desire to track their bills on a basis other than monthly, and often larger clients desire a weekly or biweekly bill or bimonthly bill.

These and other objects and advantages of the present invention can be readily derived from the following detailed description of the drawings taken inconjunction with the accompanying drawings present herein and should be considered as within the overall scope of the invention.

**Brief Description of the Drawings**

Figure 1 is a flow chart for the method of the Present Invention, improved Flat Fee Billing Method.
Figure 2 is a flow chart for the method of the Present Invention, improved Flat Fee Billing Method.
Figure 3 is a flow chart for the method of the Present Invention, improved Interim Billing Method.

Figure 4 is a Screen Snapshot for one phase of producing a Flat Fee Bill.

Figure 5 is a Screen Snapshot for one phase of producing a Flat Fee Bill.

Figure 6 is a Screen Snapshot for one phase of producing a Flat Fee Bill.

Figure 7 is a Screen Snapshot for one phase of producing a Flat Fee Bill or Standard Bill.

Figure 8 is a Screen Snapshot for one phase of producing a Flat Fee Bill.

Figure 9 is a Screen Snapshot for one phase of producing a Bill.

Figure 10 is a Screen Snapshot for one phase of producing a Bill.

Figure 11 is a Screen Snapshot for one phase of producing a Bill.

Figure 12 is a Screen Snapshot for one phase of producing a Bill.

Figure 13 is a Screen Snapshot for one phase of producing a Bill.

Figure 14 is a Screen Snapshot for one phase of producing a Bill.

Figure 15 is a Screen Snapshot for one phase of producing a Bill.

Figure 16 is a Screen Snapshot for one phase of producing a Bill.

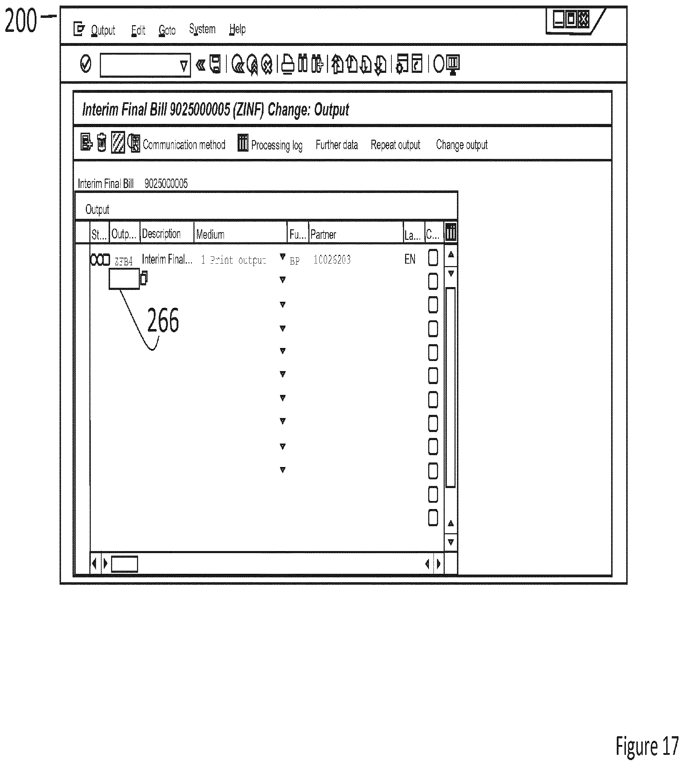

Figure 17 is a Screen Snapshot for one phase of producing a **Bill.**

Figure 18 is a Screen Snapshot for one phase of producing a **Bill.**

Figure 19 is a Screen Snapshot for one phase of producing a **Bill.**

Figure 20 is a Screen Snapshot for one phase of producing a **Bill.**

**Detailed Description of the Drawings**

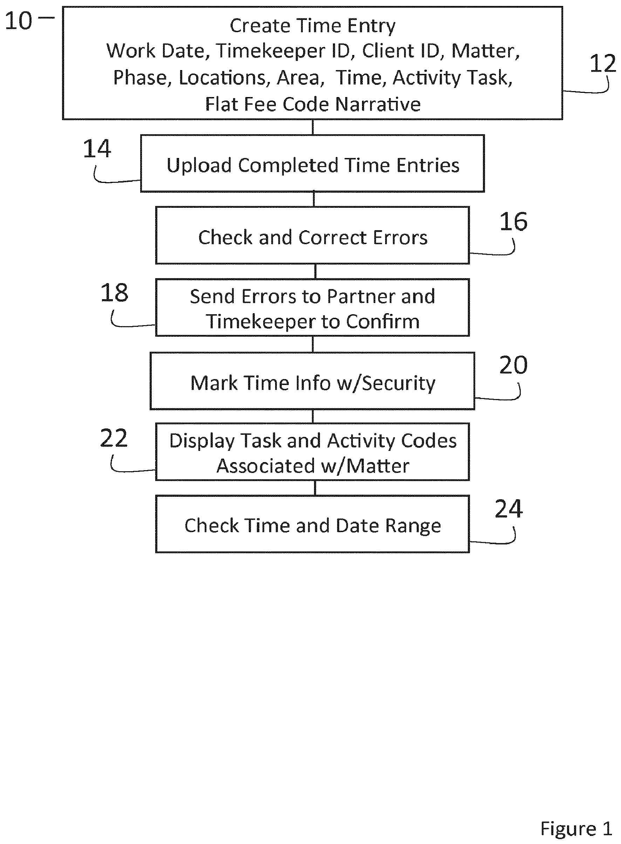

Shown now in Figure 1 is a flow chart illustrating the present invention, Improved System for Flat Fee Billing Method 10 showing creating a Time Entry for creating a Time Entry comprising entering Work Date, Timekeeper, Client Name or ID, Matter Name or ID, Phase, Work Location, Office Location, Area of Law, Time Spent in tenths or quarter hours, Activity, Task, Flat Code and a Detailed Description or Narrative 12. Next Time Entry 12 is uploaded into a regional, national or global System 14, and then the Time Entry is checked for errors, which may be automatically corrected by the Improved Method 10. When Errors are noted and corrected 16 by the Improved Method 10, a communication is sent to the Timekeeper and/or Billing Partner by email, fax, text, etc. to confirm the correction or reject it 18. In addition, at the time of upload, the Time Entry may also be coded by the user thereof, or the Improved Method 10 with a Security Code or Flag 20 which will then allow only certain staff or professionals to view the Time Entry 20. Security may be established by name of the Timekeeper and/or Billing Partner or Client Originating Partner as to which entities may view the Time Entry.

Next, the user thereof may display the Task and Activity Codes or Entries which are associated with a particular matter 22. The Improved Method may also check the time and date ranges 24 which are permissible for a particular Matter, Activity or Task. For example, the Improved Method may flag Time Entries with more than 8, 10 or 12 hours per day of Time entered for a particular Timekeeper. It may also check the date range of the Time Entry 24 to ensure it does not fall outside the Creation or Effective Date of the Task, Matter or Activity, and if it does, it will generate an Error flag to the Timekeeper or User of the Method to ensure that Time is billed correctly. It may also check to ensure that Time is not entered before the Start Date or End Date preselected for the Flat Fee Matter.

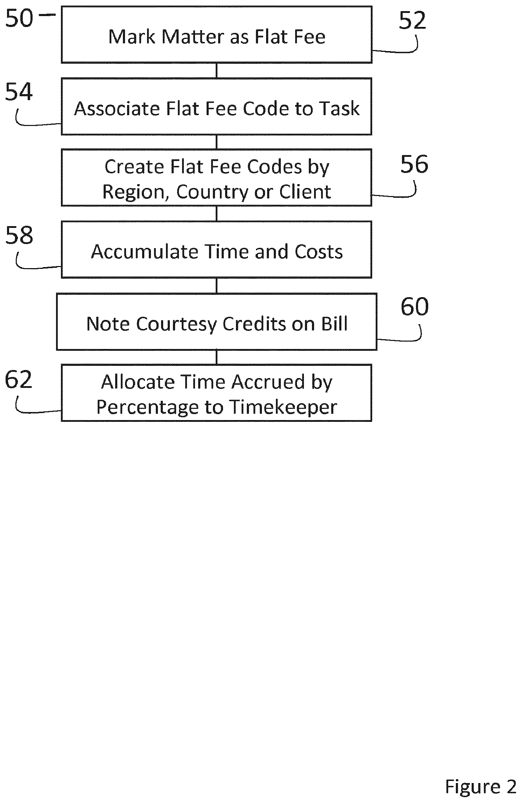

Figure 2 shows a flow chart for the Present Invention, Improved Method for Flat Fee Billing 50 which illustrates that a Matter is first created, then it may be coded as Flat Fee Matter 52 so that fees do not fall outside the contractual range for the particular Matter 52. Next, a Flat Fee Code is generated and assigned to a particular Task for that Matter 54. In addition, the Flat Fee Method 50 may also generate a Flat Fee Code by Region, Country or Client 56 for a particular Matter. This step is helpful for setting a Flat Fee by Region, County or Client 56.

After the Flat Fee Code has been created and assigned by either Task, Matter or Activity, or by Region, Country or Client, then the Improved Method 10 will begin to accumulate Time and Costs associated with the coding 58. All Time and Costs accrued which fall above the Flat Fee set by contract with the Client 58will be presented on the bill, and a Write Off or Courtesy Credit 60 will be afforded the Client for all Time and Costs falling outside the Flat Fee range previously set by the Flat Fee coding. The Improved Method 10 will accrue write offs or courtesy credits and these may be displayed on the Flat Fee Bill to the Client. Next, the Improved Method 10, will then allocate the Time accrued to the Timekeepers entering Time into the Improved Method 10, and for the purposes of leveraging, or profit sharing among Timekeepers, a percentage 62 will be assigned to each Timekeeper entering Time into the Improved Method 10. At the end of the Fiscal Year, these accrued percentages and Total Hours billed by Flat Fee will determine the profits assigned to each Timekeeper and/or Billing or Client Originating partner.

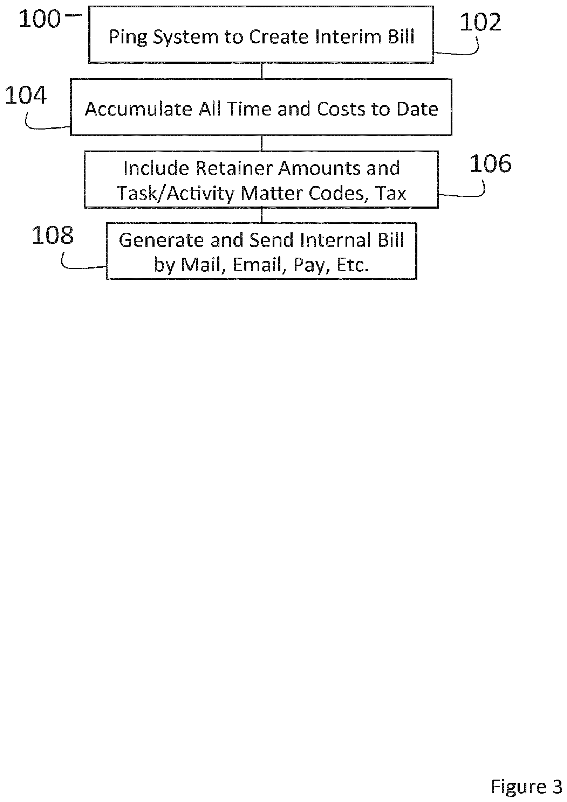

Figure 3 illustrates the Improved Method for creating an Interim Bill to the client, Improved Interim Bill Generation Method 100. In this Improved Method 100, the present Inventive Interim Bill Generation Method 100 will ping the System to generate an Interim Bill 102. After the System has been pinged, or an Interim Bill has been requested of the Improved System, the System will accumulate all Time and Coststo Date for a particular Matter, Task or Activity for a given Client 104. Next, the user thereof will be asked to enter any Retainer Amounts, select the particular Matter, Task, Activity and Client involved, as well as any Taxes required from the appropriate Taxing Authorities 106, and this information will be used to generate and send an Interim Bill by mail, email, fax, or as desired by the user thereof. 108.

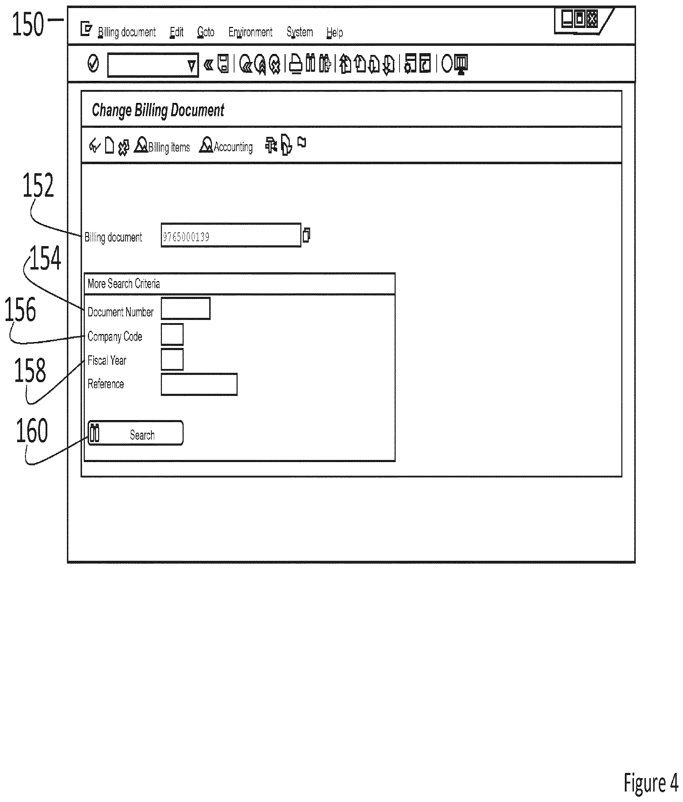

Figure 4 shows a screen shot 150 for the creation of a Standard Bill 150 where the user thereof has entered the Billing Document Number 152. Also provided on this Screen shot 150 are additional methods to search by Document Number 154, Company Code 156, Fiscal Year 168 by entering the data necessary and clicking on Search Icon 160. The Billing Document Number 152 is a unique number generated for each final bill.

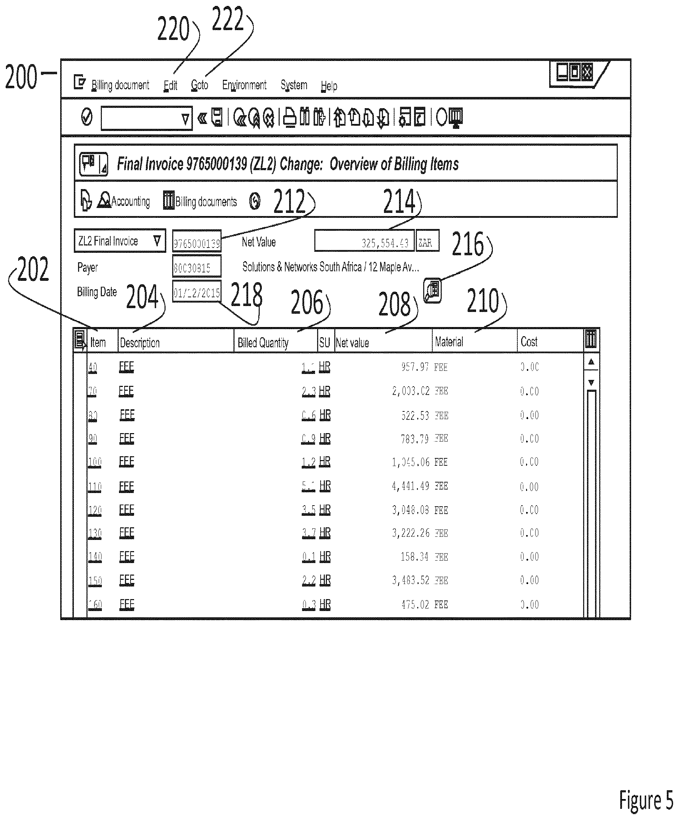

Figure 5 shows a screen shot 200 for the creation of a Standard Bill 150 where the user thereof can view the Item Number 202 of the Time Entry, a list of the Description of each Charge 204, the Time entered 206, the Amount of the fees charged 208 and the Fee Type 210 charged, as well as the Document Number 212, the Total 214 of the bill generated, the Name and Address of Payer 216 and the Billing Date218. At the top of screen shot 200 is shown a Header 220 where the user can click on "Goto" 222, then Output will appear and the user would choose Output to generate the bill.

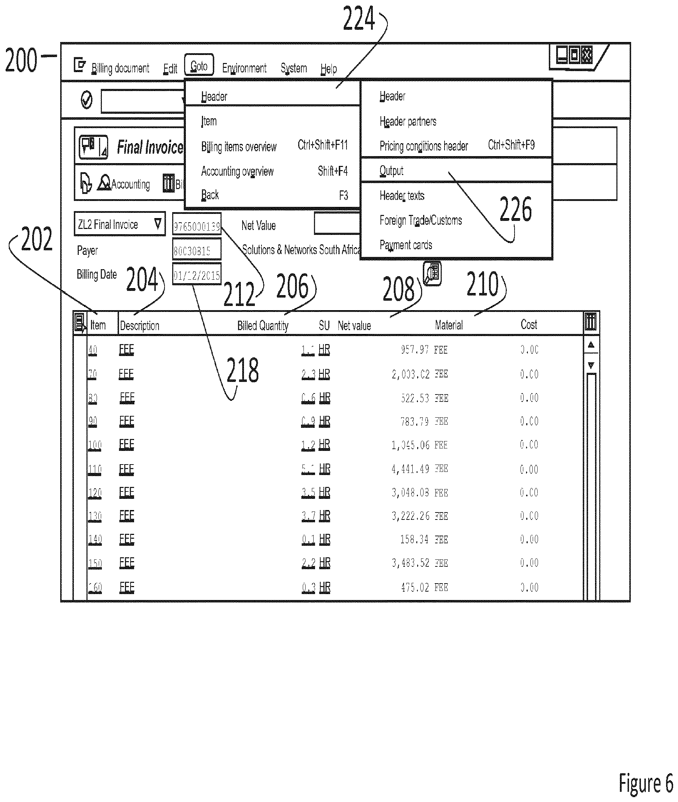

Figure 6 shows the same screen shot 200 together with a pull down menu showing Header 224 and a second pull down menu showing Output 226. Also shown are the Document Number 212, Item Number 202, Charge 204, Billing Date 218, Time Entered 206, the Fees Charged 208 and the Fee Type 210.

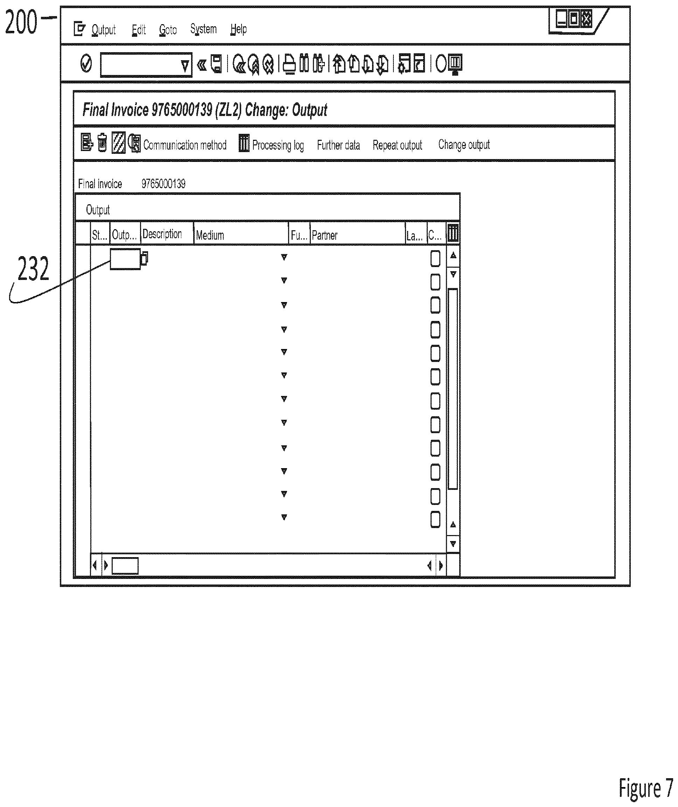

After clicking on the Output menu option 226 of Figure 6, the next Screen Snapshot is 200 (shown in Figure 7) which shows Output box 232 which the user may click on.

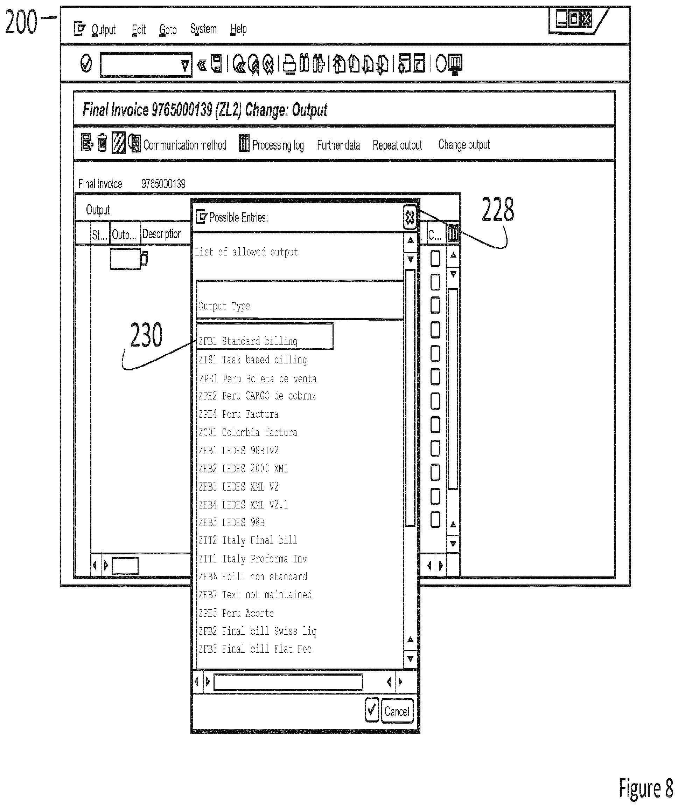

Figure 8 shows the same screen shot 200 with another pull down menu 228 where the user has highlighted the selection Standard billing 230, after which, the user will generate the bill by clicking on this option and then clicking on save. In such a manner, a Standard Bill is created and saved for transmission to the Client and/or Payer of the Bill.

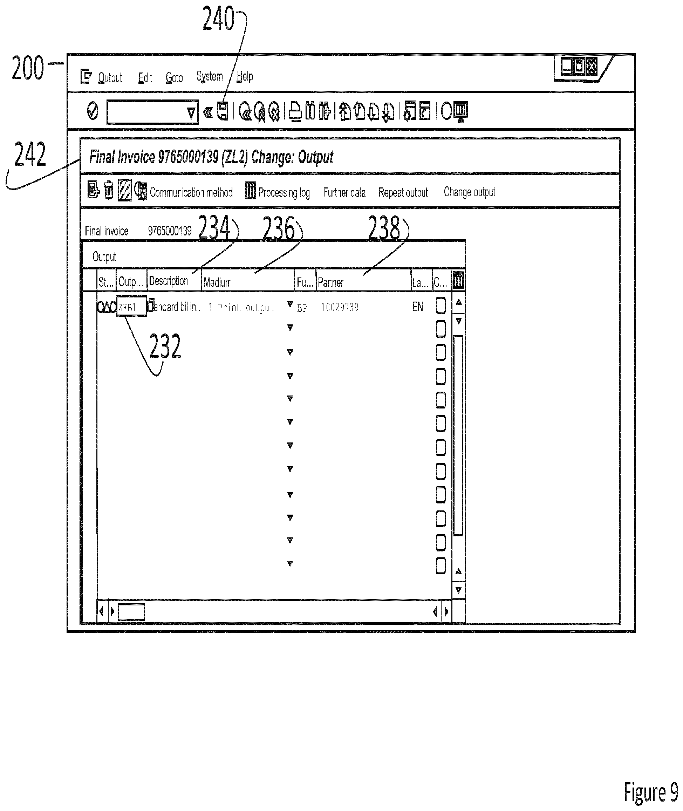

Figure 9 shows the same screen shot 200 with the user clicking on the Save icon 240 which will save the Final Invoice 242. Also shown are Output code 232, Description of type of bill 234, the Medium for printing 236 and the Billing or Client Originating Partner 238 for the flat fee bill in question.

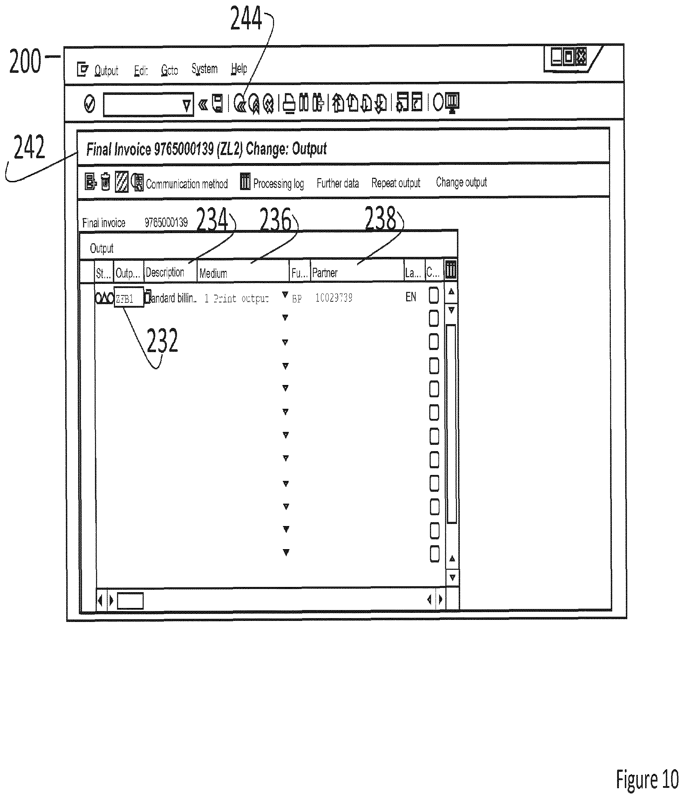

Figure 10 shows how after clicking on the save icon 240 of Figure 9, the user will be able to click on the Go back Icon 244. In this screen shot 200 is also shown Output Field 232, Description 234, Medium to Print field 236 and Billing Partner or Client Originating Partner238.

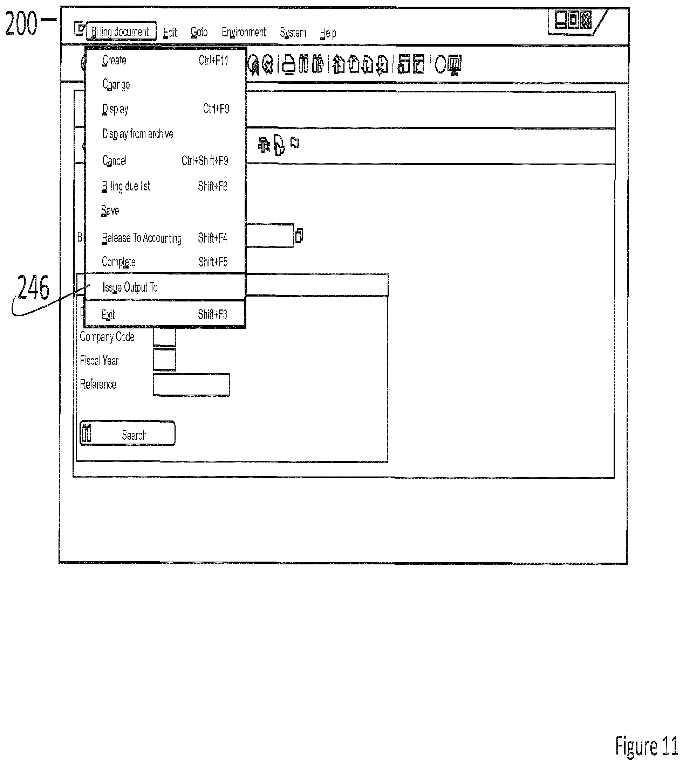

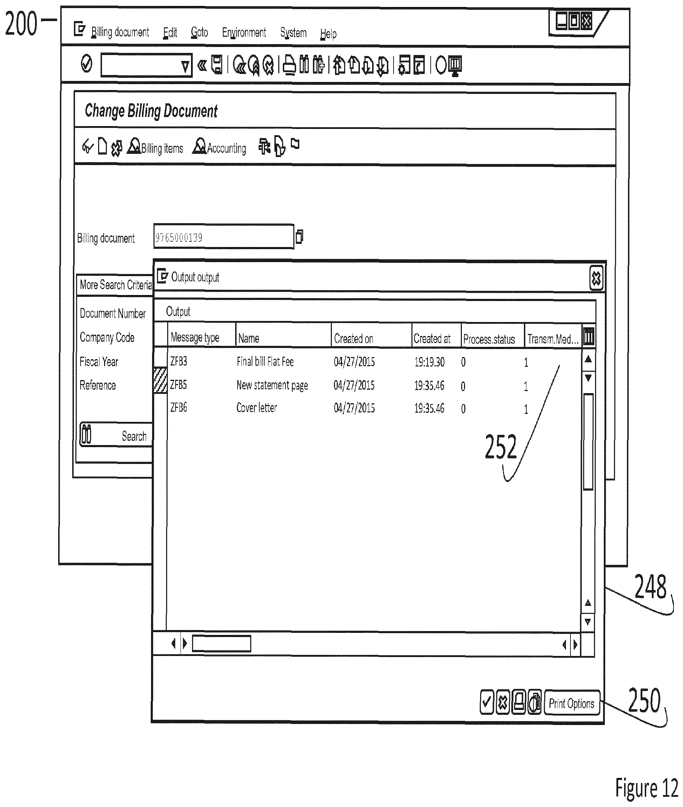

Next, the user will click on Go to Billing Document 232 and then click on Issue Output 246 as shown in Figure 11 in screen snapshot 200 . This will then take the user to a Print Preview for the Flat Fee final bill pop out box 248 (shown in Figure 12) where the user can click on the Print Options Icon and select the desired Print Option from there. Pop out box 248 shows the user selecting the Final bill Flat Fee 252 option to print.

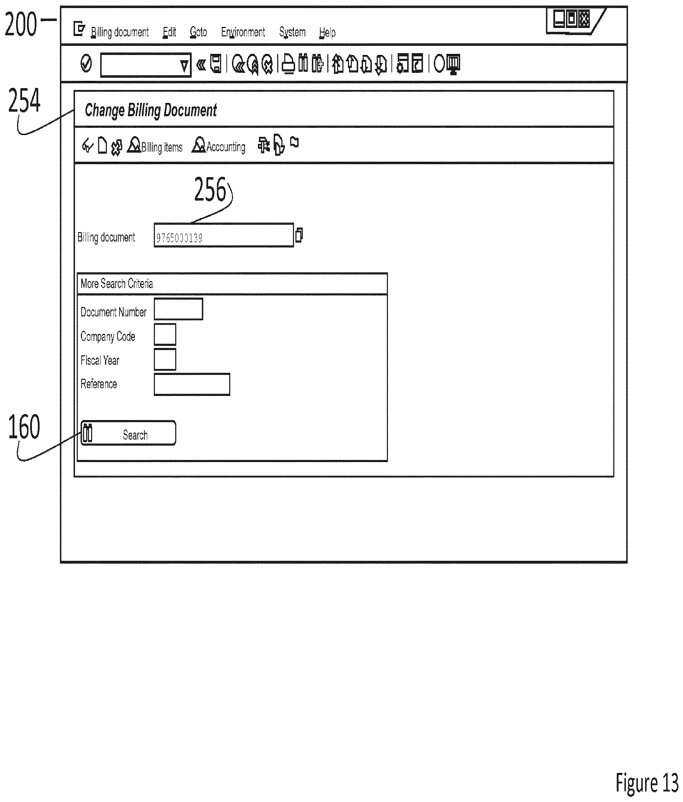

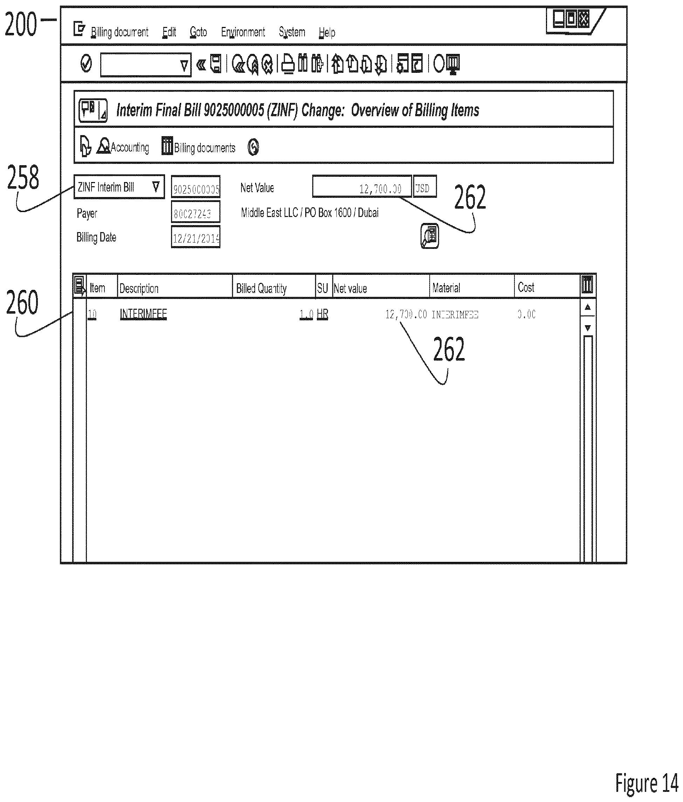

Figure 13 illustrates the present Inventive Method to generate an Interim Bill. Show in Figure 13 is screen snapshot 200 which shows the user in Change Billing Document mode 254 . In this view, the user enters the Billing Document number 256 and then clicks on the Search Icon 160. This procedure then takes the user to the Screen snapshot 200 show in Figure 14 where the user can choose the AINF Interim Final Bill 258 option. In this Billing Document, there is shown one Menu Item 260 which provides the Net Value of the bill 262.

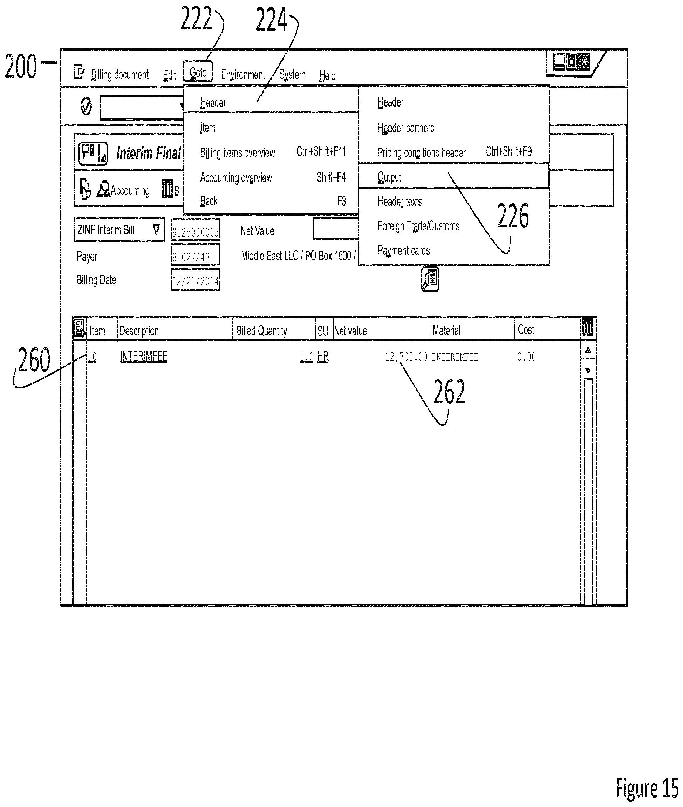

Figure 15 shows another version of screen snapshot 200 where the user has chosen the Go to icon 222 which produces first drop down menu for the Header 224, which in turn produces a second drop down menu for the Output 226. Also shown are Menu Item 260.

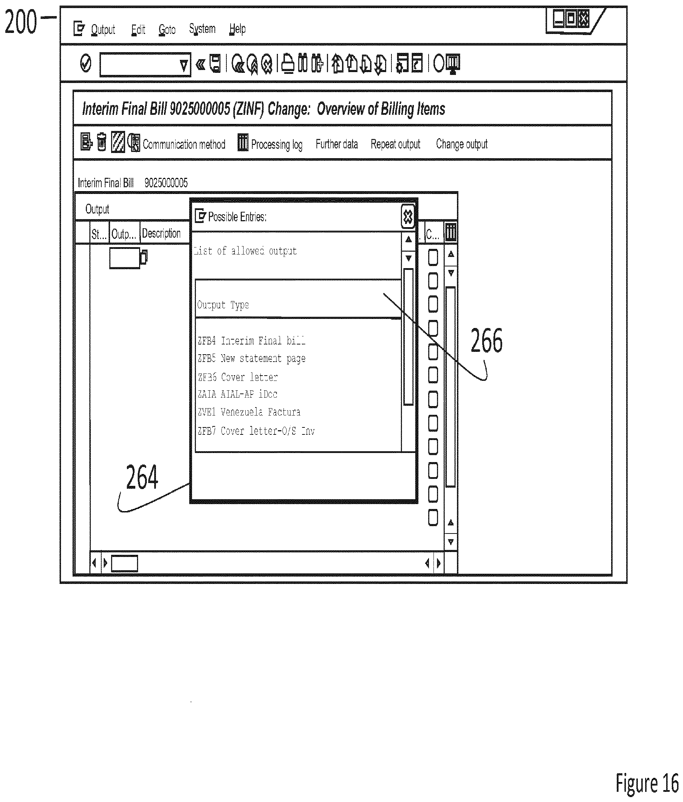

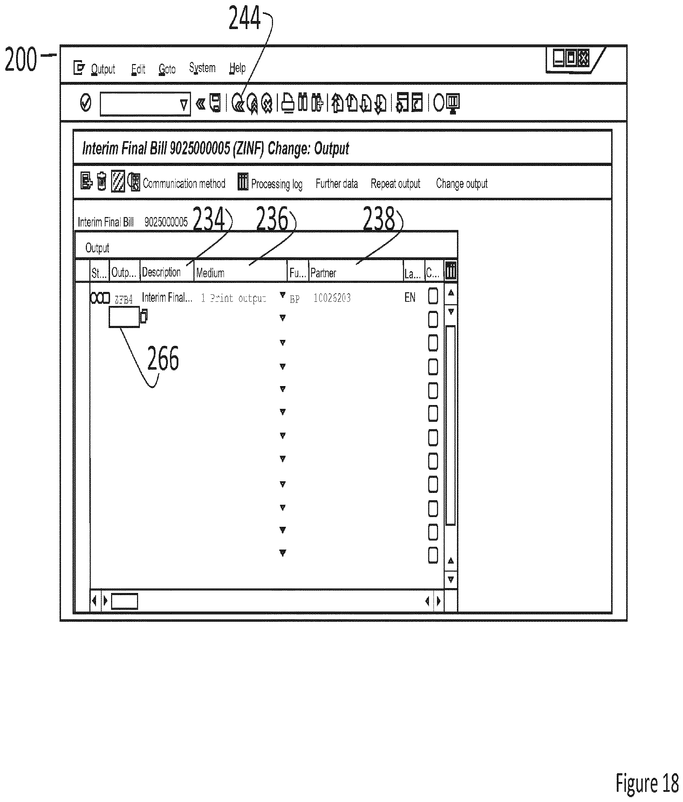

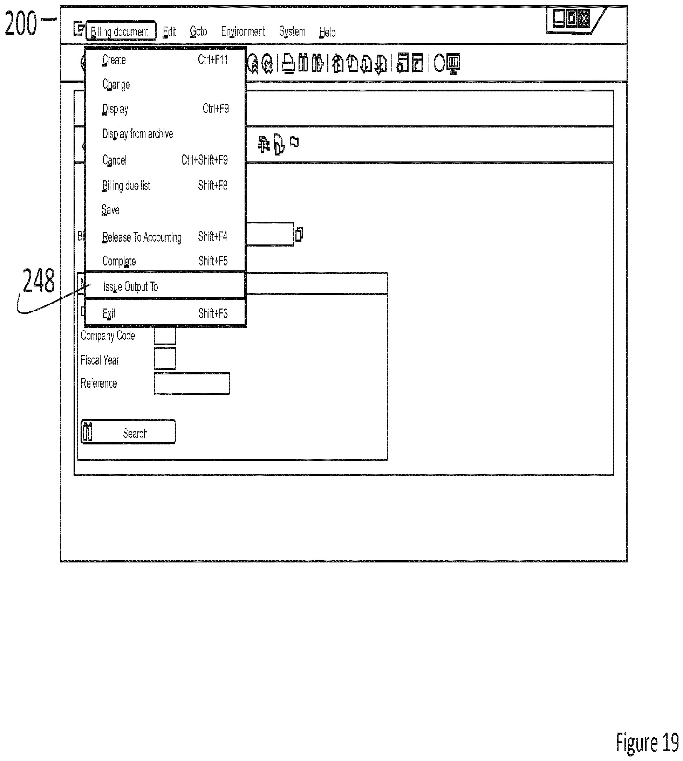

Figure 16 shows another version of screen snapshot 200 showing the Output box chosen which pops up another Menu option, Possible Entries 264 wherein the user has selected Interim Final bill 266 as the desired selection. The user will then click on Enter and Save to save the final Interim Final bill. The user will then click on the Output field of screen shot 200 showing the user selecting the Output field 266 after which Figure 18 shows another version of screen snapshot 200 showing the back button 244, the output field 266, the Description of the Bill Type 234, the Medium for printing the bill 236 and the Billing Partner or Client Originating Partner field 238. After the user clicks on Back Icon 244 the user is taken to the screen snapshot shown in Figure 19.

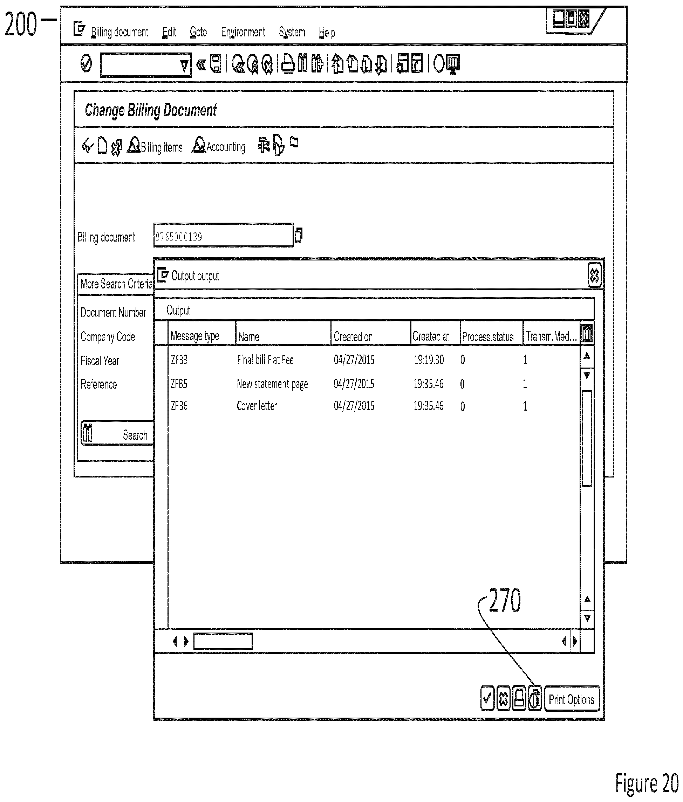

Figure 19 shows a pull down menu for a version of screen snapshot 200 where the user is choosing Issue Output To menu choice 248. After the user makes the Output To menu choice 248, this takes the user to the screen snapshot version 200 shown in Figure 20 where the user then chooses the Print Preview icon 270 where the user can first view and then print the Interim Bill selected.

Although in the foregoing detailed description the present invention has been described by reference to various specific embodiments, it is to be understood that modifications and alterations in the structure and arrangement of those embodiments other than those specifically set forth herein may be achieved by those skilled in the art and that such modifications and alterations are to be considered as within the overall scope of this invention.

**Claims**

1. A computer system configured to process data from a plurality of timekeeper devices, the computer system comprising:

   an application server comprising a processing device and a non-transitory storage medium for storing instructions that when executed by the processing device cause the processing device to perform the following:

generate a unique flat fee code including a pricing value;

generate a bill corresponding to a client ID prior to receiving a time entry from a timekeeper device;

receive the time entry from the timekeeper device, the time entry associated with the flat fee code and at least a timekeeper ID, the client ID an hourly rate and a time;

detect at least one data error in the time entry that is outside a pre-selected value;

correct each of the at least one data error according to the pre-selected value;

send a notification to the timekeeper device when the at least one data error is corrected;

receive a response notice from the timekeeper device approving or rejecting the at least one data error correction;

generate a billed total including the time multiplied by the hourly rate; and

allocate a percentage of the billed total to the timekeeper ID based on the pricing value of the flat fee code.

2. The computer system of claim 1, wherein those instructions that, when executed by the processing device, cause the processing device to detect data errors in the time entry that are outside the pre-selected value, are further operative to detect data errors in a time and date range for task codes and activity codes of the respective matter ID.

3. The computer system of claim 1, the storage medium further comprising instructions that, when executed by the processing device, cause the processing device to assign the flat fee code to a matter ID.

4. The computer system of claim 1, wherein those executable instructions that, when executed by the processing device are further operative to allocate time and costs associated with the flat fee code to the corresponding timekeeper device.

5. The computer system of claim 3, wherein those executable instructions that, when executed by the processing device are further operative to generate a bill reduction amount for a billed amount that exceeds a previously established billing arrangement that corresponds to the flat fee code so that the billed amount is the same or less than the previously established billing arrangement.

6. The computer system according to claim 1, wherein those executable instructions that, when executed by the processing device, cause the detection of data errors in the time entry that are outside the pre-selected value, are further operative to detect data errors in a time and date range for task codes and activity codes of a matter ID.

7. The computer system according to claim 1, wherein the flat fee code corresponds to any one of high volume single matter; medium volume single matter; or client-specific.

8. A method for operating a computing system comprising an application server operatively connected to a database in communication with a plurality of timekeeper devices, the method comprising:

generating a unique flat fee code including a pricing value;

generating a bill corresponding to a client ID prior to receiving a time entry from a timekeeper device;

receiving, by the application server from the timekeeper device, the time entry associated with the flat fee code and at least a timekeeper ID, the client ID an hourly rate and a time;

detecting, by the application server, at least one data error in the time entry that outside a pre-selected value;

correcting, by the application server, each of the at least one data error according to the pre-selected value;

sending, by the application server to the timekeeper device, a notification when the at least one data error is corrected;

receiving, by the application server from the timekeeper device, a response approving or rejecting the data error correction; and

generating, by the application server, a billed total including the time multiplied by the hourly rate; and

allocating a percentage of the billed total to the timekeeper ID based on the pricing value of the flat fee code.

9. The method of claim 8, wherein detecting data errors in the time entry further comprises:
detecting data errors in a time and date range for task codes and activity codes of the respective matter ID.

10. The method according to claim 9, further comprising assigning the flat fee code to a matter ID.

11. The method according to claim 7 further comprising allocating time and costs associated with the flat fee code to the corresponding timekeeper device.

**12.** The method according to claim 11 further comprising generating a bill reduction amount for a billed amount that exceeds a previously established billing arrangement for the flat fee code so that the billed amount is the same or less than the previously established billing arrangement.

**13.** The method according to claim 9, wherein the step of detecting data errors in the time entry that are outside the pre-selected value further comprises: detecting data errors in a time and date range for task codes and activity codes of a matter ID.

**14.** The method according to claim 9, wherein the flat fee code corresponds to any one of: high volume single matter; medium volume single matter; or client-specific.

Figure 1

50 — | Mark Matter as Flat Fee | 52

54 | Associate Flat Fee Code to Task |

| Create Flat Fee Codes by Region, Country or Client | 56

58 | Accumulate Time and Costs |

| Note Courtesy Credits on Bill | 60

62 | Allocate Time Accrued by Percentage to Timekeeper |

Figure 2

100 ─ | Ping System to Create Interim Bill | 102

104 | Accumulate All Time and Costs to Date |

| Include Retainer Amounts and Task/Activity Matter Codes, Tax | 106

108 | Generate and Send Internal Bill by Mail, Email, Pay, Etc. |

Figure 3

150 —

☐ Billing document   Edit   Goto   Environment   System   Help

⊘ [ ▽ ] « ▤ | ◄◖◗⊗ | 🖨 📑📑 | 📑📑📑 | 📑📑 | ○📺

## Change Billing Document

↙ ☐ 📑 ⚠Billing items  ⚠Accounting  📑 📑 ▢

152

Billing document    [9765000139]  🗋

154

More Search Criteria

156   Document Number   [        ]

Company Code   [  ]

158   Fiscal Year   [  ]

Reference   [        ]

160   📑   Search

Figure 4

Final Invoice 9765000139 (ZL2) Change: Overview of Billing Items

| Item | Description | Billed Quantity | SU | Net value | Material | Cost |
|------|-------------|-----------------|-----|-----------|----------|------|
| 40 | FEE | 1.1 | HR | 957.97 | FEE | 0.00 |
| 70 | FEE | 2.3 | HR | 2,003.02 | FEE | 0.00 |
| 80 | FEE | 0.6 | HR | 522.53 | FEE | 0.00 |
| 90 | FEE | 0.9 | HR | 783.79 | FEE | 0.00 |
| 100 | FEE | 1.2 | HR | 1,045.06 | FEE | 0.00 |
| 110 | FEE | 5.1 | HR | 4,441.49 | FEE | 0.00 |
| 120 | FEE | 3.5 | HR | 3,048.08 | FEE | 0.00 |
| 130 | FEE | 3.7 | HR | 3,222.26 | FEE | 0.00 |
| 140 | FEE | 0.1 | HR | 158.34 | FEE | 0.00 |
| 150 | FEE | 2.2 | HR | 3,483.52 | FEE | 0.00 |
| 160 | FEE | 0.3 | HR | 475.02 | FEE | 0.00 |

Figure 5

Figure 6

Figure 7

200 —

**Output** **Edit** **Goto** **System** **Help**

**Final Invoice 9765000139 (ZL2) Change: Output**

Communication method    Processing log    Further data    Repeat output    Change output

Final invoice    9765000139

Output

| St... | Outp... | Description |
|---|---|---|

228

Possible Entries:

List of allowed output

Output Type

230

ZFB1 Standard billing
ZTS1 Task based billing
ZPE1 Peru Boleta de venta
ZPE2 Peru CARGO de cobrnz
ZPE4 Peru Factura
ZC01 Colombia factura
ZEB1 LEDES 98BIV2
ZEB2 LEDES 2000 XML
ZEB3 LEDES XML V2
ZEB4 LEDES XML V2.1
ZEB5 LEDES 98B
ZIT2 Italy Final bill
ZIT1 Italy Proforma Inv
ZEB6 Ebill non standard
ZEB7 Text not maintained
ZPE5 Peru Aporte
ZFB2 Final bill Swiss liq
ZFB3 Final bill Flat Fee

✓ Cancel

C...

Figure 8

Figure 9

Figure 10

200

Billing document    Edit    Goto    Environment    System    Help

Create                      Ctrl+F11

Change

Display                     Ctrl+F9

Display from archive

Cancel                      Ctrl+Shift+F9

Billing due list            Shift+F8

Save

B    Release To Accounting   Shift+F4

Complete                    Shift+F5

246    Issue Output To

Exit                        Shift+F3

Company Code

Fiscal Year

Reference

Search

Figure 11

Figure 12

200 —

254

Change Billing Document

✓ ☐ ✗ △Billing Items  △Accounting  ⟲ ⟳ ☐

256

Billing document    9765000139    ☐

More Search Criteria

Document Number  [        ]
Company Code      [   ]
Fiscal Year       [   ]
Reference         [          ]

160

☐☐  Search

Figure 13

200 —

☞ Billing document   Edit   Goto   Environment   System   Help   ▣▢▨

⊘ [          ] ▽ « ▤ | ◒ ◒ ◒ | ▤ ▥ ▥ | ▥ ▥ ▥ ▥ | ▥ ▥ | ○ ▥

**Interim Final Bill 9025000005 (ZINF) Change: Overview of Billing Items**

▷ ☖ Accounting   ▥ Billing documents   ⊙

258

| ZINF Interim Bill ▽ | 9025000005 | Net Value | [ 12,700.00 ] USD | 262 |

Payer  80027243  Middle East LLC / PO Box 1600 / Dubai

Billing Date  12/21/2014

260

| Item | Description | Billed Quantity | SU | Net value | Material | Cost | ▥ |
|------|-------------|-----------------|-----|-----------|----------|------|---|
| 10 | INTERIMFEE | 1.0 | HR | 12,700.00 | INTERIMFEE | 0.00 | |

262

Figure 14

Figure 15

200—

| Output | Edit | Goto | System | Help |

⊘ [　　　　] ▽ «⊟ | ⊛⊛⊗ | ☐ⅢⅢ | ☐☐☐☐ | 🔳🔳 | ○🔳

## Interim Final Bill 9025000005 (ZINF) Change: Overview of Billing Items

🔲🗑️🎞️🔳 Communication method　Ⅲ Processing log　Further data　Repeat output　Change output

Interim Final Bill　9025000005

| Output | | | | |
| St... | Outp... | Description | | |
| | | ☐ | | |

| Possible Entries: | ⊗ |

List of allowed output

Output Type

ZFB4 Interim Final bill
ZFB5 New statement page
ZFB6 Cover letter
ZAIA AIAL-AP iDoc
ZVE1 Venezuela Factura
ZFB7 Cover letter-O/S Inv

266

264

Figure 16

200 —

Output   Edit   Goto   System   Help

Interim Final Bill 9025000005 (ZINF) Change: Output

Communication method   Processing log   Further data   Repeat output   Change output

Interim Final Bill   9025000005

Output

| St... | Outp... | Description | Medium | Fu... | Partner | La... | C... |
|-------|---------|-------------|--------|-------|---------|-------|------|
| | ZFB4 | Interim Final... | 1 Print output | BP | 10026203 | EN | |

266

Figure 17

244

200

Output  Edit  Goto  System  Help

Interim Final Bill 9025000005 (ZINF) Change: Output

Communication method  Processing log  Further data  Repeat output  Change output

Interim Final Bill  9025000005  234  236  238

Output

| St... | Outp... | Description | Medium | Fu... | Partner | La... | C... |
|-------|---------|-------------|--------|-------|---------|-------|------|
| ▯▯▯ | ZFB4 | Interim Final... | 1 Print output | BP | 10026203 | EN | |

266

Figure 18

200 —

| Billing document | Edit | Goto | Environment | System | Help |

Create                Ctrl+F11

Change

Display              Ctrl+F9

Display from archive

Cancel               Ctrl+Shift+F9

Billing due list        Shift+F8

Save

Release To Accounting   Shift+F4

Complete            Shift+F5

Issue Output To

Exit                 Shift+F3

248

Company Code

Fiscal Year

Reference

Search

Figure 19

34

EP 3 985 592 A1

**200**

Billing document   Edit   Goto   Environment   System   Help

## Change Billing Document

Billing items   Accounting

Billing document   9765000139

**Output output**

| | Output | | | | | |
|---|---|---|---|---|---|---|
| Message type | Name | Created on | Created at | Process.status | Transm.Med... | |
| ZFB3 | Final bill Flat Fee | 04/27/2015 | 19:19.30 | 0 | 1 | |
| ZFB5 | New statement page | 04/27/2015 | 19:35.46 | 0 | 1 | |
| ZFB6 | Cover letter | 04/27/2015 | 19:35.46 | 0 | 1 | |

More Search Criteria

Document Number
Company Code
Fiscal Year
Reference

Search

**270**

Print Options

Figure 20

Europäisches
Patentamt

European
Patent Office

Office européen
des brevets

# EUROPEAN SEARCH REPORT

Application Number

EP 21 21 0232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "TimeManager User Guide", Atlantic Associates, 1 September 2011 (2011-09-01), pages 1-195, XP055250863, Retrieved from the Internet: URL:https://d335hnnegk3szv.cloudfront.net/wp-content/uploads/sites/1101/2013/01/TimeMgrManual.pdf [retrieved on 2016-02-17] * page 8 - page 9 * * page 13 - page 20 * * page 49 - page 54 * * page 68 - page 80 * * page 137 - page 149 * ----- | 1-14 | INV. G06Q30/04 G06Q40/00 G06Q10/06 G06F17/40 G06F21/62 G09C1/00 G06Q50/18 G06Q20/14 G06Q10/10 |
| X | US 8 391 835 B1 (LUBART DANIEL [US] ET AL) 5 March 2013 (2013-03-05) * column 1, lines 13-19 * * column 2, line 48 - column 3, line 4 * * column 3, lines 30-62 * * column 4, lines 4-13 * * column 14, line 41 - column 15, line 18 * ----- | 1-14 | TECHNICAL FIELDS SEARCHED (IPC) G06Q |

The present search report has been drawn up for all claims

| Place of search | Date of completion of the search | Examiner |
|---|---|---|
| The Hague | 9 March 2022 | Mascia, Franco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 0232

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2022

| Patent document cited in search report | | Publication date | Patent family member(s) | | Publication date |
|---|---|---|---|---|---|
| US 8391835 | B1 | 05-03-2013 | US | 8391835 B1 | 05-03-2013 |
| | | | US | 8719121 B1 | 06-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 61998557 A
- EP 1145162 A
- EP 1769452 A
- EP 2026222 A
- US 20030120538 A, Boerke
- US 201300090968 A, Borza
- US 20120233044 A, Burger
- US 20140258057 A, Chen
- US 20130290154 A, Cherry
- US 20010042032 A, Chrawshaw
- US 6038547 A, Casto
- US 6747679 B, Finch, II
- US 7343316 B, Goto
- WO 2014016796 A, Gupta
- US 6832176 B, Hartigan
- WO 2015079776 A, Hishiki
- US 20140344122 A, Hodgin
- US 20090006228 A, Hodgin
- US 20020154122 A, Jackson, Jr.
- US 8838486 B, Kong
- US 20120278211 A
- WO 201011652 A, Manser
- EP 2338293 A, Molotsi
- WO 2008061146 A
- US 20150081381 A
- US 20150081487 A, Porter
- US 6185514 B
- US 8209243 B, Smith
- US 9020848 B, Ridge
- WO 2015029073 A
- US 20120173297 A1, Styn
- US 20140108644 A1, Zaents